# EUROPEAN PATENT APPLICATION

(11) **EP 2 311 595 A1**
(43) Date of publication of application: **20.04.2011**
(21) Application number: 10013549.0
(22) Date of filing: 12.10.2010
(51) Int. Cl.: B23K 9/00, B23K 9/032, B23K 9/18, B23K 37/02, B23K 25/00

(54) **Submerged arc welding device to be mounted on a first workpiece for welding the latter with a second workpiece**

(30) Priority: 14.10.2009 PT 10478509
(71) Applicant: Tegopi- Indústria metalomecânica, SA, 4405-829 Vila Nova De Gaia (PT)
(72) Inventor: Castro Silva, Antonio Jorge, 4405-829 Vila Nova de Gaia (PT)
(74) Representative: Ferreira, Maria Silvina

(57) **Abstract**

This invention refers to a submerged-arc welding device, which comprises the following components:
• power source;
• at least one welding head (12) and one parameter controller;
• at least one movement unit (1,4) (longtravel and crosstravel) of the welding head (12), fitted with speed controller, allowing speed adjustment to the speed required by the welding procedure to be used;
• at least one set of positioning sensors (14,15) to detect the shape of the workpiece (16,17) to be welded and which has the means to activate the movement unit (1,4), so that a permanent adjustment of the welding head (12) boom (13) position is achieved to the workpiece (16,17).
This invention applies to the steel and metallurgical industry, namely for the welding of more complex, non-rectilinear steel structures, such as, for example, reinforcement frames for door openings and ventilation tubes used in wind towers, the shapes of which are elliptical and/or circular.

## Description

### Technical Range of the Invention

This invention refers to a submerged-arc welding device, applicable to the steel and metallurgical industry, namely for the welding of more complex, non-rectilinear steel structures, such as, for example, reinforcement frames for door openings and ventilation tubes used in wind towers, the shapes of which are elliptical and/or circular.

### Preceding to the Invention

This invention relates to the steel and metallurgical industry, more specifically to welding procedures, namely submerged-arc welding.

The submerged-arc welding method is a long used process in this sector of activity and is, generally speaking, a welding method by fusion. The fusion of the base material with the filler material is achieved through an electrical arc between them, i.e., between the workpiece to be welded and the tip of the consumable electrode, the filler material, the wire (continuous solid or fluxed-core), being this arc submerged by a granular flux coating. During the procedure, both the filler material and the flux are continuously supplied and a part of the granular flux melts, protecting the weld pool, avoiding the contact with the air, improving its quality and giving place, after solidification, to a protecting coat that prevents the cooling of the weld from being too fast. The remaining of the flux, i.e., the flux not yet melded, is then recovered for future use.

This is a highly advanced method, for there are no losses because of the melted metal being projected into the interior, and because it allows high deposition rates with consequent higher welding speeds. In the majority of cases, this procedure is used in automatic equipments, which, although avoiding human intervention at a great extent, performs good quality welding operations. It is hence widely used in heavy steel structures fabrication and in larger thicknesses, in view of their great penetration capacity.

Under the circumstances, this welding procedure leads to a higher deposition performance and with a far better quality of the end product than most welding methods in the market, turning out to be highly reliable.

However, this type of welding also has disadvantages - one of which is its limited mobility and restrained capacity of access to certain locations to carry out welding of the required welding seams. The traditionally used equipments are prepared to perform welding joints applying only a movement of the welding head following a horizontal straight-line or joints that can be executed keeping the head fixed. In the latter case, the welding operation must be performed with continuous movement of the workpiece and at the desired speed. In view of this, workpieces that cannot be turned or moved or whenever the joint is not straight-lined, cannot be welded with this automatic procedure. The procedure is feasible manually speaking, but the advantages of reliability and performance are greatly compromised.

So being, if the structures are heavy, it becomes practically impracticable to have access to some joints, in which case manual methods are a must.

### General Description of the Invention

This invention describes a device that allows welding by submerged-arc as, for example, elliptical or circular workpieces, applied to non flat surfaces of other workpieces. The description refers to a device fitted with a movement system and continuous adjustment of the welding boom that allows the automatic welding of more complex structures.

The application of the device object of the present invention increases the performance as well as the reliability of the whole submerged-arc welding procedure in more complex structures, as reinforcement frames for door openings and ventilation tubes of wind towers. Simultaneously, the characteristics of the movement system and adjustment of the equipment all along the welding make it possible to operate automatically, always taking into consideration the particular shape of the workpiece on a case-by-cases basis. The welding operation is relatively simple and any submerged-arc welding operator can carry it out, performing, if need-be, welding operations in often rather complex configurations.

### Description of the Figures

Attached are three Figures for better understanding of the method, which show ideal performances of the invention that, on the other hand, are by no means preventive of its end purpose.

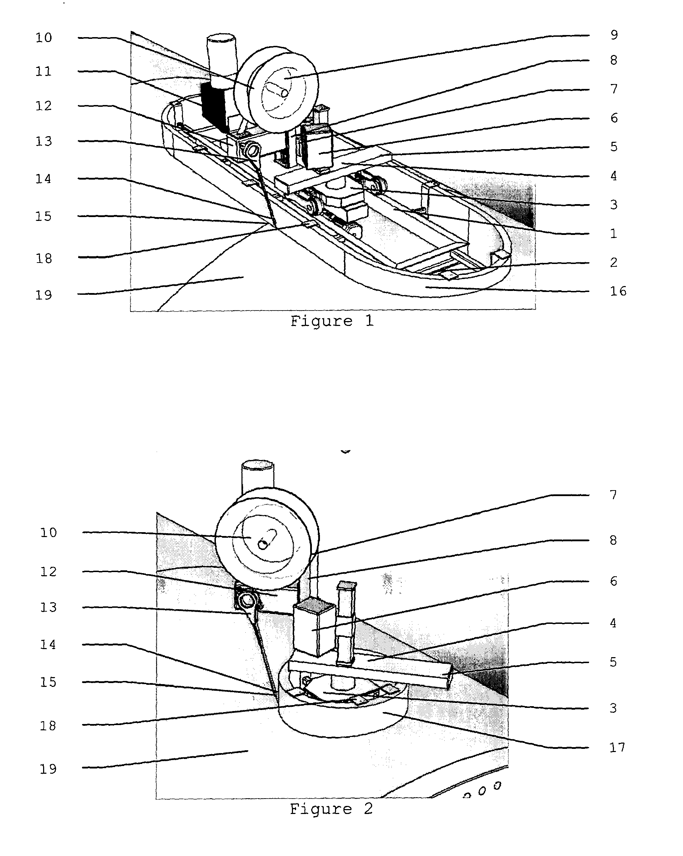

Figure 1 - Schematic representation of the welding equipment during the welding of a reinforcement frame for a door opening.
Figure 2 - Schematic representation of the welding equipment during the welding of a ventilation tube.

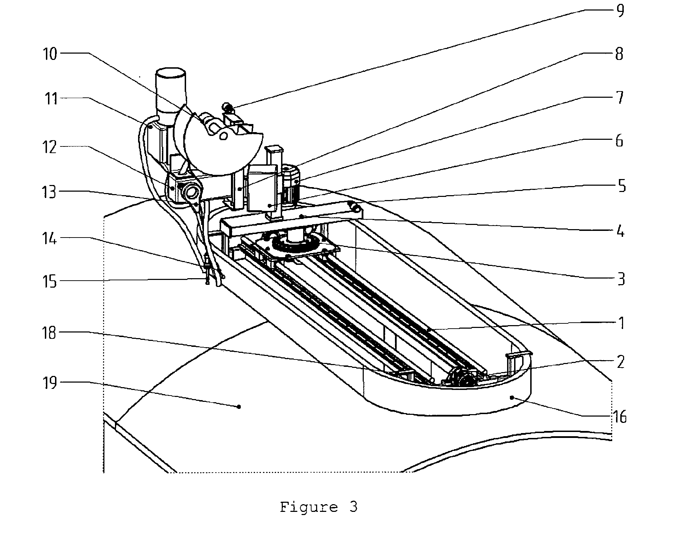

Figure 3 - Schematic representation of the welding equipment in which each element represents
   (1) The Guiding system for the longtravel;
   (2) Longtravel drive;
   (3) Rotational system;
   (4) Guiding system for the adjustment of width/radius of the workpiece;
   (5) Driving system for the adjustment of width/radius of the workpiece;
   (6) Control box of the movement systems;
   (7) Drive of the rotational movement;
   (8) The guiding system for the vertical movement;
   (9) The driving system for the vertical movement;
   (10) Support of the wire coil;
   (11) Control box of the welding parameters;
   (12) Welding head;
   (13) Boom;
   (14) Control sensor for horizontal position;
   (15) Control sensor for vertical position;
   (16) Door frame;
   (17) Ventilation tube.
   (18) Support of welding device
   (19) Second workpiece

### Detailed Description of the Invention

The submerged-arc device here described applies the submerged-arc welding method, allowing the automation movement of the welding head and the performance of welding operations in often rather complex structures, namely in accessories of wind towers, such as the reinforcement frames for door openings and ventilation tubes of wind towers.

The welding head of the submerged-arc device is fitted on a tridimensional movement system which also has the possibility of rotational movements.

According to the longitudinal, transversal, vertical and rotational directions, the movement places the boom extremity in the correct position so that the joint is welded in all its extension.

The device is fully automated by four movement systems, acting independently or simultaneously, remaining the control reliant from:
- The welding parameters of the procedure under use, in case of longtravel and rotational movements, controlling all speeds;
- The indications of the sensors in cases of transversal and vertical movements, placing the welding boom in the correct position so that the welding can be done.

The submerged-arc welding device object of the present invention comprises the following components:
· power source;
· at least one welding head and relevant parameter controller;
· at least one movement unit (longtravel and crosstravel) of the welding head, fitted with speed controller, allowing speed adjustment to the speed required by the welding procedure to be used;
· at least one set of positioning sensors, which have the feature to detect the shape of the workpiece to be welded and which has the means to activate the movement unit, so that a permanent adjustment of the welding head boom position is achieved to the workpiece to be welded.

In ideal circumstances of this method, the longtravel and rotational movements can be composed of:
· Longtravel movement means (1) and (4);
· Rotational movement means (3);
· Vertical movement means (8).

The movement - horizontal, vertical, and rotational - is geared and controlled by the speed control unit as well as the positioning sensors that make the welding head be located correctly along the welding course and keep the required speed unchanged. This provides a continuous adjustment of the welding head boom to the workpiece and to the characteristics of the welding groove between workpieces.

In a more preferential situation, the set of positioning sensors may be composed of:
· a vertical positioning sensor and a horizontal positioning sensor
   or
· a double positioning sensor that determines the vertical and horizontal positioning of the workpiece.

The submerged-arc welding device here described uses the submerged-arc welding method and allows the moving of the welding head so as to automatic welding more complex structures, namely the accessories of wind towers, and among these, reinforcement frames for door openings and tubes. This is a geared device, outlining the workpiece being welded, having a positioning sensors system for the correct positioning of the welding boom as demanded for any good quality welding job. In this sense, the real dimensions of the workpiece are permanently respected, as well as the specifications of the grooves made for that operation. The conception of the device makes it useful for the welding of both rectilinear and bended workpieces, of unchanged or variable radius, bearing in mind their real dimensions and conditions under which the welding is carried out.

### Application Examples

In a particular example of application of this invention, the submerged-arc welding device is composed of:
· Guiding system for the longtravel (1), for example a linear adjustment table 2,500mm long with a fuse coupled to the engine (2);
· Longtravel gear (2) can be, for example, a 0.18 KW 220/380V 1.3, 075A cosϕ:0.3 1340 r.p.m. engine, more specifically Electro ASSA type EC 64/3 Bonfigioli™ Reductiongear;
· The rotational system (3), composed by, for example, a wheel with a coupled reduationgear (1/50,5 factor), more specifically Rotodyne™ E90 max. 59 r.p.m.;
· The guiding system to adjust width/radius of the workpiece (4), composed of, for example, a linear adjustment table 730 mm long with a fuse coupled to the gear (5);
· The gear for the guiding system to adjust width/radius of the workpiece (5) can be performed, for example, by a 24 Cv CC - 110 r.p.m. engine;
· The control box of the movement systems (6) can be a speed variator, more specifically a Comander SE™ 1,5 M 0.75 kW;
· The gear of the rotational movement (7) can be performed by a 18 kW 220/380V 1.3/0.75 A cos ϕ:0.6 1340 r.p.m. engine, more specifically: Electro DDA™ type EC 63/4 Bonfigioli™ Reductiongear;
· The guiding system for the vertical movement (8) can be, for example, composed by a linear adjustment engine 420mm long and a fuse coupled to engine 9;
· The gear of the guiding system for the vertical movement (9) can be, for example, a 24 v CC 110 r.p.m. engine;
· The coil support of the wire (10) is composed by, for example, a 4mm-wire, 30 kg-coil,
· The welding parameters control box (11) can be composed, for example, by a flux tank;
· The welding head (12) can be composed, for example, by a 0.12 KW 42V 4,5 A 4000 r.p.m. engine couple to a wire advancement system;
· The boom (13) can be, for example, a copper alloy;
· The horizontal/vertical positioning control sensors (14/15) can be of the one axial type;

1) Workpiece Shape - Symmetrical workpiece according to three coordinated axis that go through its geometric center, composed of two identical eliptical arches interconnected by two parallel rectilinear pieces.
2) Shape of the workpiece getting the frame - Conical section of the wind tower in which, with manual oxicutting, an opening is made whose shape for cutting is the above-stated frame.
3) Preparation of the weld joint - the frame outlining is beveled, usually by manual method, according to the technical specifications.
4) Characteristics of the welding joint marking - in the drawing, it follows the marking of the frame's outer perimeter and not yet on a plan, since it results from the intersection of a conic surface and a non-rectilinear surface.
5) Type of welding - Taking into consideration the high thicknesses to weld, namely in very high wind towers, a reliable and cost-effective method is of preference. The submerged-arc welding method is consequently of choice. Using the traditional welding equipments is not the most desired method, in view of the shape of above-stated welding joint. According to the state-of-the-art, a non-automatic welding method would have to be performed. The application of the described method permits the usage of arc submerged welding.
6) Application of the Submerged-arc Welding Device
   - After making an entrance in the tower section for the door frame, the frame is placed in its right position by spot welding and, by manual method, a pass of seal weld;
   - On the submerged-arc device the consumables (wire and flux) are placed, in according with the welding procedure specifications;
   - The welding device is placed on the arc itself and the welding operation begins, after introducing the welding parameters in the longtravel and rotational movements control systems, namely welding speed. The device object of this invention allows that the boom completely outlines the joint to be welded. After each round is complete, corresponding to the workpiece total perimeter to weld, the device returns to its starting position, therefore avoiding too much twisting of the feeding cables. The procedure is continuously repeated, as many times as the weld seams necessary to complete the welding. The continuous action of the sensors permits that the positioning of the boom is, every time, the correct one relatively to the joint, adapting its position both on the drawing and on dimensions, and following the needs of the existing groove, which is often irregular and asymmetric.
   - After the welding on one side of the tower section (outer or inner), the operation is repeated on the other side of the tower section (outer or inner).

It is evident that there are several ways to make this welding device in which regards welding wire(s), gear motors, sensors, dimensions of aeveral components device design, protection environment conditions or even no use of protection environment conditions. The range of the invention is limited to the scope of patent claim in annex.

## Claims

1. Submerged-arc welding device comprising a power source, a coil (10) for electrode support, at least one welding head (12), with its boom (13) and respective parameter controller, **comprising**:
· a longtravel movement unit;
· a width / radius adjustment system (4) for the welding workpiece; and
· a vertical movement guiding system (8);
· driving means (2, 5, 7, 9) cooperating with the guiding means (1, 4, 8);
wherein the welding device is mounted onto a first welding workpiece as reinforcement frame (16,17), by means of supports or adequate clamps (18), the longtravel guiding system being arranged in a slightly parallel level to the surface of the second welding workpiece (19), and the said reinforcement frame (16,17) having a ring shape (16, 17), and the second welding workpiece having a surface slightly perpendicular to the side walls of the said reinforcement frame (16,17), and wherein the joint of the two workpieces is deposited with one or more welding seams, the boom (13) performing one or more closed circuits, respectively, around the said reinforcement frame (16, 17).

2. The welding device, according to claim 1, **comprising** at least a set of positioning sensors (14, 15), which allow detecting the shape of the workpiece meant to be welded, and comprising driving means (2, 5, 7, 9) to drive the welding head (12) so that a continuous correct adjustment of the positioning of the boom (13) is obtained.

3. The welding device, according to the preceding claims, wherein the driving means (2, 5, 7, 9) of movement systems act, either independently, or simultaneously, their respective welding parameter control depending on the ongoing process, as well as on the information from the positioning sensors (14, 15), thus allowing for the arrangement of the boom in its correct position for the welding to take place.

4. The welding device, according to the preceding claims, wherein horizontal, vertical and pivoting movement means are driven by motor means (2, 5, 7, 9), which are controlled by the speed control unit (6) and by the set of positioning sensors (14, 15), which are responsible for the welding head to be maintained in place during its displacement along the welding path, as well as for its displacement at a desired speed.

5. The welding device according to any of the preceding claims, wherein the set of positioning sensors comprises two positioning sensors (14, 15), one for determining the horizontal positioning and the other for determining the vertical positioning of the boom.

6. The welding device, according to the preceding claims, wherein the set of positioning sensors (14, 15) comprises at least one double positioning sensor which determines the horizontal and vertical positioning.
